# EUROPÄISCHE PATENTANMELDUNG

(11) **EP 0 985 599 A2**
(43) Veröffentlichungstag der Anmeldung: **15.03.2000**
(21) Anmeldenummer: 99115205.9
(22) Anmeldetag: 31.07.1999
(51) Int. Cl.: B62K 19/46

(54) **Motorrad mit Behältnis seitlich eines Soziussitzes**

(30) Priorität: 11.09.1998 DE 19841748
(71) Anmelder: Bayerische Motoren Werke Aktiengesellschaft, 80809 München (DE)
(72) Erfinder: Abe, Karl Heinz, 86916 Kaufering (DE); Massepp, Siegfried, 80689 München (DE)

(57) **Zusammenfassung**

Es wird ein Motorrad beschrieben, mit mindestens einem seitlich eines Soziussitzes (1) angebrachten Behältnis, insbesondere einem Motorradkoffer, mit einem Grundgehäuse, mit einem daran angelenkten Deckel (2), mit einer Griffeinrichtung (3), mit einer Einrichtung zum Festlegen des Behältnisses am Fahrzeugrahmen, mit einer Einrichtung zum Verriegeln des Deckels (2) mit dem Grundgehäuse und mit einem Schloß (4), dadurch gekennzeichnet, daß die Griffeinrichtung (3) so am Behältnis positioniert ist, daß diese von einem Sozius, auf dem Soziussitz (1) sitzend, als Halteeinrichtung benutzt werden kann.

## Beschreibung

Die Erfindung betrifft ein Motorrad mit mindestens einem seitlich eines Soziussitzes angebrachten Behältnis, insbesondere einem Motorradkoffer, nach dem Oberbegriff des Hauptanspruchs.

Es ist bereits bekannt, ein Motorrad so zu gestalten, daß im wesentlichen neben einem Soziussitz links und rechts ein fest mit dem Motorrad verbundenes oder ein abnehmbares Behältnis befestigt ist. Dieses Behältnis, auch als Motorradkoffer bezeichnet, dient zum Verstauen von Gepäck. Desweiteren ist es bekannt, an einem Motorrad mindestens eine Halteeinrichtung für einen Sozius zu befestigen. Diese Halteeinrichtungen sind als reelingartige Handgriffe im wesentlichen hinter dem Sozius oder seitlich des Sozius bekannt. Sie sind fest am Motorrad angebracht.

Die deutsche Patentschrift 43 02 949 C beschreibt einen Motorradkoffer, der durch Verschwenken des Tragegriffs am Fahrzeug fixiert wird. Der Tragegriff ist so integriert, daß er bei am Motorrad festgelegtem Motorradkoffer in einer Kofferausnehmung versenkt ist. Der Tragegriff ist also als Halteeinrichtung nicht brauchbar.

Deshalb ist es Aufgabe der Erfindung, ein Motorrad bereitzustellen, bei dem die Halteeinrichtung für einen Sozius optimal plaziert ist, wobei der Raum am Motorrad seitlich und hinter dem Sozius zur Unterbringung von Gepäck optimal gestaltet sein soll.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist ein Motorrad mit mindestens einem seitlich eines Soziussitzes angebrachten Behältnis, mit einem Grundgehäuse, mit einem daran angelenkten Deckel, mit einer Griffeinrichtung, mit einer Einrichtung zum Festlegen des Behältnisses am Fahrzeugrahmen, mit einer Einrichtung zum Verriegeln des Deckels mit dem Grundgehäuse und mit einem Schloß, dadurch gekennzeichnet, daß die Griffeinrichtung so am Behältnis positioniert ist, daß diese von einem Sozius, auf dem Soziussitz sitzend, als Halteeinrichtung benutzt werden kann.

Das hat den Vorteil, daß für den Sozius keine separate Halteeinrichtung am Motorrad vorhanden sein muß, die dann das Unterbringen von Gepäck an dieser Stelle verhindert.

Bei einer bevorzugten Ausführung der Erfindung ist das Motorrad so gestaltet, daß mindestens das Grundgehäuse des Behältnisses über die Einrichtung zum Festlegen des Behältnisses am Fahrzeugrahmen an diesem durch eine Verbindung festgelegt ist, die nur unter Verwendung von Werkzeug lösbar ist.

Ist das Behältnis mit der Griffeinrichtung nicht einfach vom Motorrad abnehmbar, so ist vorteilhafterweise sichergestellt, daß die Griffeinrichtung für den Sozius immer am Motorrad mitgeführt wird.

Bei einer weiteren bevorzugten Ausführung der Erfindung ist die Griffeinrichtung im wesentlichen im Bereich einer in Fahrtrichtung nach vorne gerichteten Hälfte des Behältnisses positioniert. Eine so positionierte Griffeinrichtung ist günstig im Griffbereich des Sozius, der dadurch eine günstige Sitzposition einnehmen kann, auch wenn er sich an der Griffeinrichtung festhält. Insbesondere, wenn die Griffeinrichtung als Ausnehmung im Grundgehäuse und/oder im Deckel oder in einer Baueinheit, die oben an das Grundgehäuse und/oder den Deckel anschließt, gestaltet ist, und, in Fahrtrichtung gesehen, im wesentlichen schräg, von hinten oben nach vorne unten verläuft, ist eine gute Halteposition für den Sozius gewährleistet.

Bei einer vorteilhaften Ausführung der Erfindung grenzt im wesentlichen im Bereich einer in Fahrtrichtung nach hinten gerichteten Hälfte des Behältnisses mindestens ein weiteres Behältnis, insbesondere ein Topcase, von oben an das Behältnis an.

Das hat den Vorteil, daß sich der Sozius nach hinten anlehnen kann. Dabei kann die in Fahrtrichtung zum Sozius hinweisende Fläche des weiteren Behältnisses sogar als Rückenlehne mit Polster gestaltet sein. Zusammen mit der Griffeinrichtung seitlich des Sozius ergibt dies eine sehr sichere Sitzeinrichtung für den Sozius. Und zwar vor allem dann, wenn das Grundgehäuse des weiteren Behältnisses, über eine Einrichtung zum Festlegen des weiteren Behältnisses am Fahrzeugrahmen, an diesem durch eine weitere Verbindung festgelegt ist, die nur unter Verwendung von Werkzeug lösbar ist. Des weiteren hat das den Vorteil, daß das weitere Behältnis nicht einfach vom Motorrad entfernt werden kann und somit immer als sichere Sitzeinrichtung für den Sozius zur Verfügung steht.

Ist, wie bei einer weiteren vorteilhaften Ausführung der Erfindung, das Grundgehäuse des weiteren Behältnisses so am Motorrad festgelegt, daß in Fahrzeuglängsrichtung mindestens zwei verschiedene Stellungen zum Fahrzeugrahmen möglich sind, so hat das den Vorteil, daß die Rückenlehne für verschieden große Mitfahrer auf dem Soziussitz verstellt werden kann.

Bei einer weiteren bevorzugten Ausführung der Erfindung ist die Griffeinrichtung, die Einrichtung zum Verriegeln des Deckels mit dem Grundgehäuse und das Schloß in einer Baueinheit eingebaut, die mit dem Deckel verbunden ist, und die sich im wesentlichen vom Grundgehäuse und/oder vom Deckel aus nach oben erstreckt.

Das hat den Vorteil, daß die Baueinheit unabhängig vom Behältnis vormontiert werden kann, was einfachere Montageverhältnisse ergibt.

Auch insbesondere, wenn die Einrichtung zum Verriegeln des Deckels mit dem Grundgehäuse ein in Querrichtung flexibles und in Längsrichtung zwischen zwei Endstellungen verschiebbares Schließband umfaßt, das Deckel und Grundgehäuse in einer Endstellung formschlüssig verbindet. Durch ein solches Schließband für das Behältnis ist vorteilhafterweise gegeben, daß die Formgebung des Behältnisses einfach an die Motorradkonturen angepaßt werden kann. Das flexible Schließband erlaubt, daß die Schließeinrichtungen zwischen Grundgehäuse und Deckel, zum Beispiel die Schließbolzen, in ihrem Verlauf, zum Beispiel in Längsrichtung, in verschiedenen Richtungen zueinander stehen und nicht nur geradlinig bewegt werden können.

Gerade, wenn das in Querrichtung flexible Schließband mindestens unterhalb der Ausnehmung, in Fahrtrichtung gesehen, im wesentlichen von hinten nach vorne und von oben nach unten geführt ist, kann die Kofferkontur einfach an Gegebenheiten am Motorrad angepaßt werden, bei gleichzeitiger günstiger Lage der Griffeinrichtung zum Festhalten für den Sozius.

Ist das Grundgehäuse des Behältnisses, über die Einrichtung zum Festlegen des Behältnisses am Fahrzeugrahmen, an diesem durch eine Verbindung festgelegt, die nur unter Verwendung von Werkzeug lösbar ist, so kann einfach im Grundgehäuse, eine Betätigungseinrichtung zum Entriegeln mindestens eines Teils der Sitzeinrichtung untergebracht werden. Die Unterbringung der Betätigungseinrichtung zum Entriegeln eines Sitzes im Behältnis hat den Vorteil, daß die Sitzverriegelung kein Schloß benötigt. Das Schloß für das Behältnis dient gleichzeitig als Schloß der Sitzverriegelung. Um den Sitz entriegeln zu können braucht somit vorteilhafterweise nur das Behältnis geöffnet werden.

Ein bevorzugtes Ausführungsbeispiel der Erfindung ist in der nachfolgenden Beschreibung mit der zugehörigen Zeichnung näher dargestellt. Es zeigen:
- Figur 1: eine Seitenansicht eines Motorrads entsprechend der Erfindung,
- Figur 2: eine Baueinheit, die sich im wesentlichen vom Deckel des Behältnisses aus nach oben erstreckt, in perspektivischer Ansicht und
- Figur 3: eine Seitenansicht dieser Baueinheit mit Teilen der Schließeinrichtung.

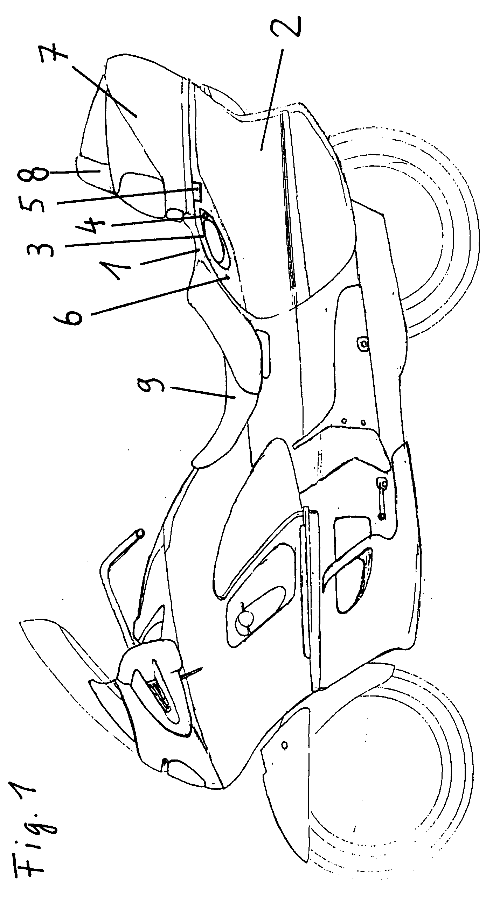

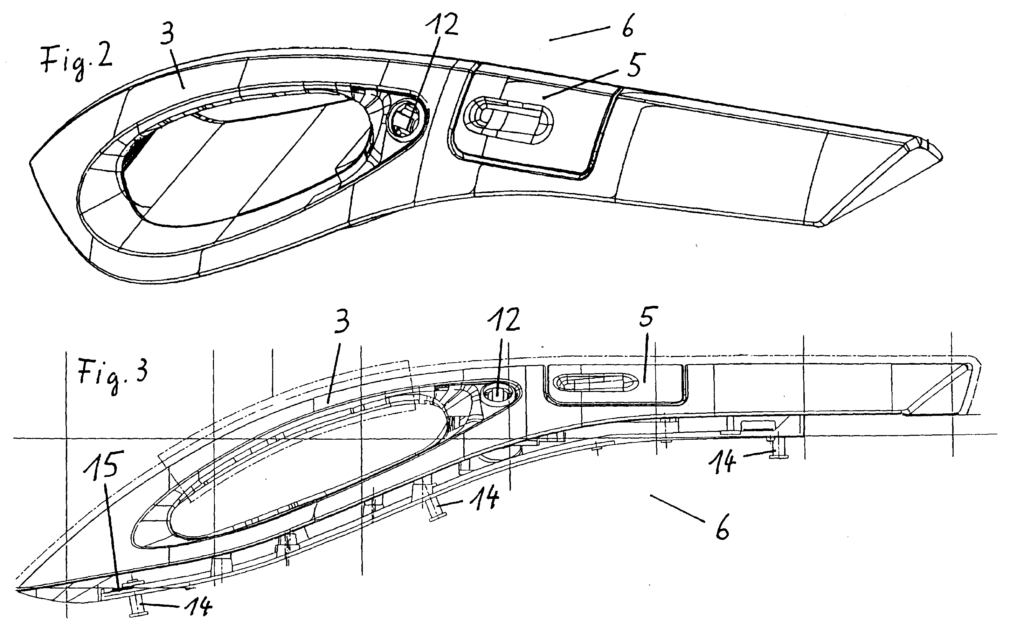

In den Figuren 2 und 3 sind Konstruktionshilfslinien enthalten, die zur Darstellung der Erfindung nicht notwendig sind.

In Figur 1 ist in ein Motorrad dargestellt, mit einem seitlich eines Soziussitzes 1 angebrachten Behältnis, einem Motorradkoffer, bestehend aus einem in dieser Ansicht nicht sichtbaren Grundgehäuse und einem daran angelenkten Deckel 2. Desweiteren besitzt der Motorradkoffer eine Griffeinrichtung 3, eine in dieser Ansicht nicht sichtbare Einrichtung zum Festlegen des Motorradkoffers am Fahrzeugrahmen, eine ebenfalls in dieser Ansicht nicht sichtbare Einrichtung zum Verriegeln des Deckels mit dem Grundgehäuse und ein Schloß 4. Von der Einrichtung zum Verriegeln des Deckels 2 mit dem Grundgehäuse ist ein Betätigungshebel 5 sichtbar, der, wie die Griffeinrichtung 3 und das Schloß 4, in einer Baueinheit 6 eingebaut ist, die mit dem Deckel 2 verbunden ist und sich im wesentlichen vom Deckel 2 aus nach oben erstreckt. Das Grundgehäuse ist so am Motorrad angebracht, daß es nur unter Verwendung von Werkzeug lösbar ist. Im wesentlichen im Bereich einer, in Fahrtrichtung gesehen, nach hinten gerichteten Hälfte des Motorradkoffers grenzt von oben an diesen ein weiteres Behältnis an, das als Topcase 7 ausgebildet ist. Das Topcase 7 besitzt zum nicht gezeichneten Sozius hin gerichtet eine Rückenlehne 8, die, zusammen mit der Griffeinrichtung 3, diesem einen sicheren Halt in einer günstig gestalteten Sitzposition gibt. Das Topcase 7 ist ebenfalls so am Motorrad festgelegt, daß es nur unter Verwendung von Werkzeug lösbar ist. Allerdings kann es in Fahrzeuglängsrichtung in zwei verschiedenen Stellungen zum Fahrzeugrahmen an diesem festgelegt werden. Das heißt, die Stellung der Rückenlehne 8 kann an verschieden große Mitfahrer auf dem Soziussitz angepaßt werden.

Die Griffeinrichtung 3 ist im wesentlichen im Bereich einer in Fahrtrichtung nach vorne gerichteten Hälfte des Motorradkoffers positioniert, wobei sie als Ausnehmung in der Baueinheit 6, in Fahrtrichtung gesehen, im wesentlichen schräg, von hinten oben nach vorne unten, verläuft. Im Inneren des Grundgehäuses, in dieser Zeichnung nicht sichtbar, befindet sich eine Betätigungseinrichtung zum Entriegeln des Sitzes 9 für den Fahrer. Der Sitz 9 ist über ein nicht gezeichnetes Scharnier nach oben schwenkbar am Motorrad festgelegt. Er wird in der nicht gezeichneten, nach oben geschwenkten Stellung durch eine nicht gezeichnete Gasfeder gehalten. Die Betätigungseinrichtung zum Entriegeln des Sitzes 9, im Inneren des Grundgehäuses wird also ebenfalls durch das Schloß 4 zum Verriegeln des Deckels 2 mit dem Grundgehäuse gesichert.

Figur 2 zeigt die Baueinheit 6, die mit dem Deckel 2 verbunden ist und sich im wesentlichen vom Deckel 2 aus nach oben erstreckt. Die Griffeinrichtung 3 ist als Ausnehmung eingearbeitet. Neben der Griffeinrichtung 3 befindet sich eine weitere Ausnehmung 12 zum Einsetzen des in dieser Ansicht nicht gezeichneten Schlosses 4. Desweiteren ist in der Baueinheit 6 der Betätigungshebel 5 integriert, zur Steuerung einer Einrichtung zum Verriegeln des Deckels 2 mit dem Grundgehäuse.

Der Aufbau dieser Einrichtung ist teilweise in Figur 3 dargestellt. Diese Figur zeigt zusätzlich zu den bereits in Figur 2 beschriebenen Merkmalen der Baueinheit 6 noch Schließbolzen 14, die dazu dienen, das hier nicht gezeichnete Grundgehäuse mit dem hier nicht gezeichneten Deckel 2 im geschlossenen Zustand zu verbinden. Die Schließbolzen 14 werden über den Betätigungshebel 5 bewegt, indem durch diesen ein in Querrichtung flexibles und in Längsrichtung verschiebbares Schließband 15 zwischen zwei Endstellungen bewegt wird. In einer Endstellung des Schließbands 15 wird durch die an diesem befestigten Schließbolzen 14 der Deckel 2 mit dem Grundgehäuse formschlüssig verbunden. In der anderen Endstellung des in Querrichtung flexiblen Schießbandes 15, das in Fahrtrichtung gesehen im wesentlichen von hinten nach vorne und von oben nach unten geführt ist, ist der Deckel 2 vom Grundgehäuse entriegelt und kann somit geöffnet werden.

## Patentansprüche

1. Motorrad mit mindestens einem seitlich eines Soziussitzes (1) angebrachten Behältnis, insbesondere einem Motorradkoffer, mit einem Grundgehäuse, mit einem daran angelenkten Deckel (2), mit einer Griffeinrichtung (3), mit einer Einrichtung zum Festlegen des Behältnisses am Fahrzeugrahmen, mit einer Einrichtung zum Verriegeln des Deckels (2) mit dem Grundgehäuse und mit einem Schloß (4), dadurch gekennzeichnet, daß die Griffeinrichtung (3) so am Behältnis positioniert ist, daß diese von einem Sozius, auf dem Soziussitz (1) sitzend, als Halteeinrichtung benutzt werden kann.

2. Motorrad nach Anspruch 1, dadurch gekennzeichnet, daß mindestens das Grundgehäuse des Behältnisses über die Einrichtung zum Festlegen des Behältnisses am Fahrzeugrahmen an diesem durch eine Verbindung festgelegt ist, die nur unter Verwendung von Werkzeug lösbar ist.

3. Motorrad nach einem der Ansprüche 1 oder 2, dadurch gekennzeichnet, daß die Griffeinrichtung (3) im wesentlichen im Bereich einer in Fahrtrichtung nach vorne gerichteten Hälfte des Behältnisses positioniert ist.

4. Motorrad nach einem der Ansprüche 1 bis 3, dadurch gekennzeichnet, daß im wesentlichen im Bereich einer in Fahrtrichtung nach hinten gerichteten Hälfte des Behältnisses mindestens ein weiteres Behältnis, insbesondere ein Topcase (7), von oben an das Behältnis angrenzt.

5. Motorrad nach einem der Ansprüche 1 bis 4, dadurch gekennzeichnet, daß ein Grundgehäuse des weiteren Behältnisses über eine Einrichtung zum Festlegen des weiteren Behältnisses am Fahrzeugrahmen an diesem durch eine weitere Verbindung festgelegt ist, die nur unter Verwendung von Werkzeug lösbar ist.

6. Motorrad nach einem der Ansprüche 1 bis 5, dadurch gekennzeichnet, daß das Grundgehäuse des weiteren Behältnisses in Fahrzeuglängsrichtung in mindestens zwei verschiedenen Stellungen zum Fahrzeugrahmen an diesem festgelegt werden kann.

7. Motorrad nach einem der Ansprüche 1 bis 6, dadurch gekennzeichnet, daß die Griffeinrichtung (3) als Ausnehmung im Grundgehäuse und/oder im Deckel (2) ausgebildet ist.

8. Motorrad nach einem der Ansprüche 1 bis 7, dadurch gekennzeichnet, daß die Griffeinrichtung (3), die Einrichtung zum Verriegeln des Deckels (2) mit dem Grundgehäuse und das Schloß (4) in einer Baueinheit (6) eingebaut sind, die mit dem Grundgehäuse und/oder mit dem Deckel (2) verbunden ist, und die sich im wesentlichen vom Grundgehäuse und/oder vom Deckel (2) aus nach oben erstreckt.

9. Motorrad nach einem der Ansprüche 1 bis 7, dadurch gekennzeichnet, daß die Ausnehmung im Grundgehäuse und/oder im Deckel (2) bzw. in der Baueinheit (6), in Fahrtrichtung gesehen, im wesentlichen schräg, von hinten oben nach vorne unten verläuft.

10. Motorrad nach einem der Ansprüche 1 bis 9, dadurch gekennzeichnet, daß die Einrichtung zum Verriegeln des Deckels (2) mit dem Grundgehäuse ein in Querrichtung flexibles und in Längsrichtung zwischen zwei Endstellungen verschiebbares Schließband (15) umfaßt, das Deckel (2) und Grundgehäuse in einer Endstellung formschlüssig verbindet.

11. Motorrad nach einem der Ansprüche 1 bis 10, dadurch gekennzeichnet, daß das in Querrichtung flexible Schließband (15) mindestens unterhalb der Ausnehmung, in Fahrtrichtung gesehen, im wesentlichen von hinten nach vorne und von oben nach unten geführt ist.

12. Motorrad nach einem der Ansprüche 1 bis 11, dadurch gekennzeichnet, daß im Grundgehäuse eine Betätigungseinrichtung zum Entriegeln mindestens eines Teils einer Sitzeinrichtung (9) untergebracht ist.
